# EUROPÄISCHE PATENTSCHRIFT

(11) **EP 2 379 911 B1**
(45) Veröffentlichungstag und Bekanntmachung des Hinweises auf die Patenterteilung: **05.11.2014**
(21) Anmeldenummer: 10700802.1
(22) Anmeldetag: 14.01.2010
(51) Int. Cl.: F16H 1/32, F16H 49/00, H02K 49/10, H02K 7/09

(54) **TAUMELGETRIEBE**
WOBBLE MECHANISM
MÉCANISME À PLATEAU OSCILLANT

(30) Priorität: 22.01.2009 AT 992009
(43) Veröffentlichungstag der Anmeldung: 26.10.2011
(73) Patentinhaber: Puchhammer, Gregor, 1130 Wien (AT)
(72) Erfinder: Puchhammer, Gregor, 1130 Wien (AT)
(74) Vertreter: Rippel, Andreas
(86) Internationale Anmeldenummer: PCT/AT2010/000010
(87) Internationale Veröffentlichungsnummer: WO 2010/083543

(56) Entgegenhaltungen:
- DE-A1- 10 237 686
- DE-A1- 19 533 084
- FR-A1- 2 286 984
- JP-A- 7 063 164
- JP-A- 7 248 047
- JP-A- 9 273 475
- US-A- 1 330 393

## Beschreibung

Die Erfindung bezieht sich auf ein Taumelgetriebe umfassend ein Gehäuse und einen auf einer Eingangswelle angeordneten Taumelkörper, der mit wenigstens einer Reihe von am Taumelkörper angeordneten Kraftübertragungselementen versehen ist, die zur Verdrehung einer Ausgangswelle mit gehäuseseitig und ausgangsseitig angeordneten sekundären Kraftübertragungselementen zusammenwirken.

Ein derartiges aus der FR 2 286 984 A1 bekanntes Taumelgetriebe besitzt Zahnkränze als Kraftübertragungselemente. Solche Zahnkränze arbeiten verhältnismäßig laut.

Die Erfindung hat es sich zum Ziel gesetzt, ein Taumelgetriebe der eingangs genannten Art zu schaffen, das äußerst leise arbeiten kann. Erreicht wird dies dadurch, dass die wenigstens eine Reihe von am Taumelkörper angeordneten Kraftübertragungselementen von an dessen äußerem Umfang angeordneten Magneten gebildet ist, und die gehäuseseitig angeordneten sekundären Kraftübertragungselemente von Magneten gebildet sind, die dem äußeren Umfang des Taumelkörpers gegenüberliegend angeordnet sind.

Erfindungsgemäße Taumelgetriebe können als Untersetzungsantrieb ausgeführt sein, ebenso aber auch als Übersetzungsantrieb oder als Stelleinrichtung, Feststelleinrichtung oder Positioniereinrichtung.

Werden bei einem Taumelgetriebe erfindungsgemäß die Eingangswelle und die dazu koaxiale Ausgangswelle als Hohlwellen ausgebildet, ist es möglich, durch die beiden Hohlwellen Bedienungsleitungen od. dgl. zu führen.

Bei der Verwendung von erfindungsgemäßen Kraftübertragungselementen kann es zweckmäßig sein, durch Veränderung des Winkels zwischen dem Taumelkörper und der Achse der Ausgangswelle die Kraftübertragungselemente außer Zusammenwirken zu bringen. Dadurch kann ein Auskuppeln bzw. ein Überlastschutz erreicht werden.

Nachstehend ist die Erfindung anhand von in den Zeichnungen dargestellten Ausführungsbeispielen näher beschrieben, ohne auf diese Beispiele beschränkt zu sein. Dabei zeigen jeweils im Schnitt:
- Fig. 1: ein Taumelgetriebe mit einer Kombination einer Magnetstufe und einem bogenverzahnten Kegelradpaar;
- Fig. 2: ein Taumelgetriebe, bei dem Antrieb und Abtrieb um 90 Grad versetzt sind;
- Fig. 3: ein Taumelgetriebe mit einem zweireihig mit Magneten besetzten Taumelkörper;
- Fig. 4: ein Taumelgetriebe mit einem einreihig mit Magneten besetzten Taumelkörper.

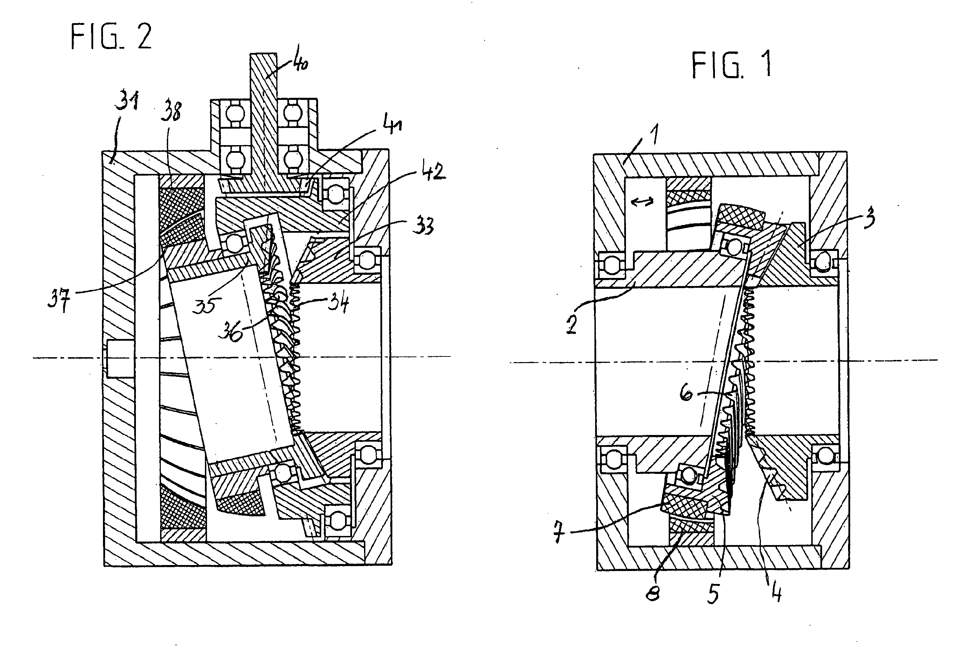

Gemäß Fig. 1 ist in einem Gehäuse 1 eine Eingangswelle 2 gelagert, die als Hohlwelle ausgebildet ist. Eine dazu koaxiale Ausgangswelle 3 ist ebenfalls im Gehäuse 1 gelagert. Auch diese Welle 3 ist als Hohlwelle ausgebildet.

Die Welle 3 ist mit einer bogenverzahnten Kegelradverzahnung 4 versehen, die auch als besonderer, mit der Welle 3 verbundener Teil ausgebildet sein könnte.

Auf der Eingangswelle 2 ist in bekannter Weise ein Taumelkörper 5 gelagert, der mit einer Bogenverzahnung 6 versehen ist, die mit der bogenverzahnten Kegelradverzahnung 4 zusammenwirkt. Am Taumelktirper 5 sind am Umfang Kraftübertragungselemente in Form von Magneten 7 angeordnet, die mit Magneten 8 zusammenwirken, die mit dem Gehäuse 1 verbunden sind. Diese Magnete 8 bilden die sekundären Kraftübertragungselemente des Taumelgetriebes.

Wie durch einen Doppelpfeil angedeutet, können die Magnete 8 axial verschiebbar sein.

Durch die Anordnung der ersten Stufe des Taumelgetriebes als Magnetgetriebestufe 7, 8 kann dies zur Messung des auf das Getriebe wirkenden Antriebsmomentes verwendet werden. Durch das Moment, das von der Aüsgangswelle 3 auf den Taumelkörper 5 wirkt, wird dieser mit dem Abtriebsmoment belastet. Dieses stützt sich über die Magnetkräfte am Gehäuse 1 ab. Dadurch verdreht sich der Taumelkörper 5 relativ zum Gehäuse 1 in Abhängigkeit des wirkenden Abtriebmomentes. Diese Verdrehung ist ein Maß für den Moment und kann durch eine bekannte Vorrichtung gemessen werden.

Die Messgröße "Drehmoment" kann für Anwendungen einem Steuergerät zugeführt werden und für Regelungsaufgaben verwendet werden.

Durch die mögliche axiale Verschiebung der Magnetreihe 8 kann das begrenzende Drehmoment verändert werden.

Beim Ausführungsbeispiel nach Fig. 2 entsprechen die Teile 31, 33, 34, 35, 36, 37 und 38 den Teilen 1, 3, 4, 5, 6, 7 und 8 der Anordnung nach Fig. 1.

Ein wesentlicher Unterschied gegenüber der Ausführung nach Fig. 1 ist, dass der Antrieb in einem Winkel von 90 Grad zum Abtrieb erfolgt. Die Antriebswelle 40 ist über eine Kegelradverzahnung 41 mit einer Taumelwelle 42 verbunden. Die Taumelwelle 42 treibt über ein innen liegendes Lager den Taumelkörper 35 an. Dieser ist wieder mit Magneten 37 ausgestattet, die mit im Gehäuse 31 gelagerten Magneten 38 zusammenwirken.

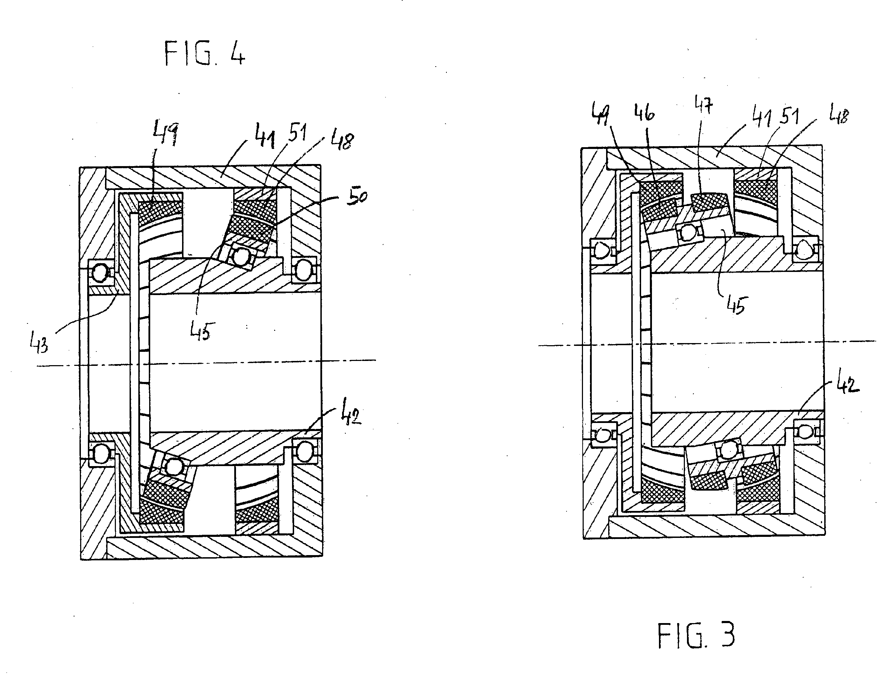

Bei den Ausführungsbeispielen nach den Fig. 3 und 4 ist in einem Gehäuse 41 eine Eingangswelle 42 gelagert, mit der ein Taumelkörper 45 verbunden ist. Der Taumelkörper 45 ist beim Ausführungsbeispiel nach Fig. 3 mit zwei Reihen 46, 47 von Magneten bestückt, die abwechselnd mit Magneten 48 und 49 zusammenarbeiten.

Beim Ausführungsbeispiel nach Fig. 4 ist der Taumelköper 45 nur mit einer Reihe 50 von Magneten versehen. Das Drehmoment der Aüsgangswelle 43 stützt sich über die Magnetkräfte und über das elastische Element 51 am Gehäuse 41 ab und bewirkt eine korrespondierende Verdrehung des Magnetrades 48. Diese Verdrehung ist ein Maß für das im Getriebestrang wirkende Drehmoment und kann für eine Drehmomentenmessung herangezogen werden.

Im Rahmen der Erfindung sind zahlreiche Abänderungen möglich. So könnte der Winkel zur Erzeugung der Taumelbewegung veränderbar sein. Dies ist dann von Vorteil, wenn das Spiel zwischen den zusammenwirkenden Trägern veränderbar sein soll.

Der Taumelkörper könnte auch zweiteilig ausgeführt sein, wobei die beiden Teile drehbar zueinander angeordnet sind und eine gemeinsame Drehachse besitzen. Beide Teile sind über ein Verbindungselement zu koppeln, das elastische Eigenschaften besitzt. Da das volle Drehmoment über diese Koppelung übertragen wird, ist das Maß der Verdrehung ein Maß für das am Abtrieb momentan herrschende Drehmoment.

## Patentansprüche

1. Taumelgetriebe umfassend ein Gehäuse (1, 31, 41) und einen auf einer Eingangswelle (2, 42) angeordneter Taumelkörper (5, 35, 45), der mit wenigstens einer Reihe von am Taumelkörper (5, 35, 45) angeordneten Kraftübertragungselementen versehen ist, die zur Verdrehung einer Ausgangswelle (3, 33, 43) mit gehäuseseitig und ausgangsseitig angeordneten sekundären Kraftübertragungselementen zusammenwirken, **dadurch gekennzeichnet, dass** die wenigstens eine Reihe von am Taumelkörper (5, 35, 45) angeordneten Kraftübertragungselementen von an dessen äußerem Umfang angeordneten Magneten (7, 37, 46, 47, 50) gebildet ist, und die gehäuseseitig angeordneten sekundären Kraftübertragungselemente von Magneten (8, 38, 48) gebildet sind, die dem äußeren Umfang des Taumelkörpers (5, 35, 45) gegenüberliegend angeordnet sind.

2. Taumelgetriebe nach Anspruch 1, **dadurch gekennzeichnet, dass** die Eingangswelle (2, 42) und/oder die dazu koaxiale Ausgangswelle (3, 33, 43) als Hohlwellen ausgebildet sind.

3. Taumelgetriebe nach Anspruch 1 oder 2, **dadurch gekennzeichnet, dass** der Winkel zwischen dem Taumelkörper und der Achse der Ausgangswelle (3, 33, 43) veränderbar ist.

4. Taumelgetriebe nach den Ansprüchen 1 bis 3, **dadurch gekennzeichnet, dass** die von Magneten (8) gebildeten, gehäuseseitig angeordneten sekundären Kraftübertragungselemente axial verschiebbar sind.

5. Taumelgetriebe nach einem der Ansprüche 1 bis 4, **dadurch gekennzeichnet, dass** ein Antrieb über eine in einem Winkel von 90° zu einem Abtrieb liegende Antriebswelle (40) erfolgt.

6. Taumelgetriebe nach einem der Ansprüche 1 bis 5, **dadurch gekennzeichnet, dass** der Winkel zur Erzeugung der Taumelbewegung veränderbar ist.

7. Taumelgetriebe nach einem der Ansprüche 1 bis 6, **dadurch gekennzeichnet, dass** der Taumelkörper zweiteilig ausgeführt ist, wobei die beiden Teile drehbar zueinander angeordnet sind und eine gemeinsame Drehachse besitzen.

8. Taumelgetriebe nach einem der Ansprüche 1 bis 7, **dadurch gekennzeichnet, dass** zur Abstützung des Drehmomentes der Ausgangswelle (43) ein elastisches Element (51) angeordnet ist.

## Claims

1. A wobble gear comprising a housing (1, 31, 41) and a wobble body (5, 35, 45) arranged on an input shaft (2, 42), which is provided with at least a series of force transmission elements arranged on the wobble body (5, 35, 45) which for rotating an output shaft (3, 33, 43) interact with secondary force transmission elements arranged on the housing side and the output side, **characterized in that** the at least one series of force transmission elements arranged on the wobble body (5, 35, 45) are formed by magnets (7, 37, 46, 47, 50) which are arranged on its outer circumference and the secondary force transmission elements arranged on the housing side are formed by magnets (8, 38, 48), which are arranged located opposite the outer circumference of the wobble body (5, 35, 45).

2. The wobble gear according to Claim 1, **characterized in that** the input shaft (2, 42) and/or the output shaft (3, 33, 43) which is coaxial thereto are designed as hollow shafts.

3. The wobble gear according to Claim 1 or 2, **characterized in that** the angle between the wobble body and the axis of the output shaft (3, 33, 43) is variable.

4. The wobble gear according to the Claims 1 to 3, **characterized in that** the secondary force transmission elements arranged on the housing side and formed by magnets (8) are axially shiftable.

5. The wobble gear according to any one of the Claims 1 to 4, **characterized in that** a drive is effected via a driveshaft (40) which is located at an angle of 90° to an output.

6. The wobble gear according to any one of the Claims 1 to 5, **characterized in that** the angle for creating the wobble movement is variable.

7. The wobble gear according to any one of the Claims 1 to 6, **characterized in that** the wobble body is embodied in two parts, wherein the two parts are arranged rotatable to one another and have a common axis of rotation.

8. The wobble gear according to any one of the Claims 1 to 7, **characterized in that** for supporting the torque of the output shaft (43) an elastic element (51) is arranged.

## Revendications

1. Mécanisme oscillant comprenant un boîtier (1, 31, 41) et un corps oscillant (5, 35, 45) monté sur un arbre d'entrée (2, 42), qui est équipé d'au moins une série d'éléments de transmission de force disposés sur un corps oscillant (5, 35, 45), qui coopèrent à la rotation d'un arbre de sortie (3, 33, 43) avec des éléments de transmission de force secondaires disposés côté boîtier et côté sortie, **caractérisé en ce que** la au moins une série d'éléments de transmission de force disposés sur un corps oscillant (5, 35, 45) est formée d'aimants (7, 37, 46, 47, 50) disposés à sa périphérie, et, les éléments de transmission de force secondaires disposés côté boîtier sont formés d'aimants (8, 38, 48) qui sont disposés de façon opposée à la périphérie extérieure du corps oscillant (5, 35, 45).

2. Mécanisme oscillant selon la revendication 1 **caractérisé en ce que** l'arbre d'entrée (2, 42) et/ou l'arbre de sortie à cet effet coaxial (3, 33, 43) sont constitués comme des arbres creux.

3. Mécanisme oscillant selon la revendication 1 ou 2 **caractérisé en ce que** l'angle entre le corps oscillant et l'axe de l'angle de sortie (3, 33, 43) peut être modifié.

4. Mécanisme oscillant selon les revendications 1 à 3 **caractérisé en ce que** les éléments de transmission de force secondaires disposés côté boîtier, formés d'aimants (8) peuvent être déplacés dans le sens axial.

5. Mécanisme oscillant selon une quelconque des revendications 1 à 4 **caractérisé en ce qu'**un entraînement a lieu par un arbre d'entraînement (40)situé dans un angle de 90° par rapport à une prise d'entraînement.

6. Mécanisme oscillant selon une quelconque des revendications 1 à 5 **caractérisé en ce que** l'angle permettant de générer la nutation peut être modifié.

7. Mécanisme oscillant selon une quelconque des revendications 1 à 6 **caractérisé en ce que** le corps oscillant est réalisé en deux partie, les deux parties étant montées pouvant tourner l'une par rapport à l'autre et possèdent un axe de rotation commun.

8. Mécanisme oscillant selon une quelconque des revendications 1 à 7 **caractérisé en ce qu'**un élément élastique (51) est disposé pour faciliter le couple de l'arbre de sortie (43).
